# EUROPEAN PATENT SPECIFICATION

(11) **EP 1 013 538 B1**
(45) Date of publication and mention of the grant of the patent: **26.02.2003**
(21) Application number: 99203646.7
(22) Date of filing: 04.11.1999
(51) Int. Cl.: B60C 25/04

(54) **A bead guide tool for facilitating the mounting of tubeless tyres for tyre removal machines**
Werkzeug zum Führen von Reifenwulsten für die Erleichterung der Montierung eines schlauchlosen Reifens
Outil de guidage de talons pour faciliter le montage de pneus tubeless

(30) Priority: 23.12.1998 IT RE980134
(43) Date of publication of application: 28.06.2000
(73) Proprietor: CORGHI S.p.A., I-42015 Correggio Emilia (Reggio Emilia) (IT)
(72) Inventor: Corghi, Remo, 42015 Correggio (Reggio Emilia) (IT)
(74) Representative: Corradini, Corrado

(56) References cited:
- US-A- 3 100 011
- US-A- 3 125 152
- US-A- 3 522 832
- US-A- 4 173 245

## Description

This patent relates to a tool usable on machines for mounting and removing a tyre on and from a wheel rim, usually known as tyre removal machines, the tool being particularly suitable for wheels of industrial vehicles such as trucks, trailer trucks, agricultural machines and earth moving machines.

Specifically, the tool of the invention is able to facilitate the mounting of tubeless tyres on well-based rims while safeguarding the integrity of the tyre bead and hence ensuring a seal for the inflation air against the rim of the vehicle wheel.

As is well known, tyre removal machines for industrial vehicle wheels generally comprise a motorized shaft, horizontal or vertical depending on the type of machine, on which the wheel for which the tyre is to be changed or turned is locked and centered by suitable usual means.

Known machines, e.g. the one disclosed by US-A-4 173 245, which corresponds to the preamble of claim 1, are provided with a tool carrier arm arranged in a horizontal plane substantially parallel to the wheel plane and movable parallel to itself towards and away from the wheel rim by means of a hydraulic cylinder-piston unit.

Tyre removal machines are generally provided with a series of tools for application to the end of the tool carrier arm, their shape depending on the type of wheel rim, tyre and operation to be carried out.

The tool generally used for removing and mounting tubeless tyres from and on well-based rims of industrial vehicles consists of a frusto-conical roller with a wide rounded head, which is idly mounted on a shaft fixed to the end of the tool carrier arm of the tyre removal machine.

As is well known, a tubeless tyre is removed and mounted by pressing the frusto-conical roller against the tyre bead in one direction while the wheel rotates, so as to completely free the bead from the wheel rim, then in the other direction to shift it beyond the rim edge. This operation is carried out firstly on the rear bead and then on the front bead of the tyre, the rear bead being that which when the wheel is mounted on the tyre removal machine faces the body of the machine, and the front bead being that which faces the operator.

Machines equipped in this manner can be used on tubeless tyres, but they have proved not to sufficiently safeguard the integrity of the bead during the mounting of the tyre, in particular when operating on wheel rims having their bead retaining edge damaged on the outside, so that they scratch against the tyre bead.

This is due to the fact that during the final stage of tyre mounting, the second bead, generally the front bead, is in contact with and slides against the outside of the edge of the rim, which rotates together with the tyre.

Particularly when the wheel rim is old or has the outside of the edge ruined or even slightly scratched, this contact causes damage to the bead which prejudices its pneumatic seal against the wheel rim, this seal being essential to enable a tubeless tyre to be inflated and to maintain the pressure within it.

Up to now, this problem has been solved with the aid of a lever inserted manually by the operator. Besides being able to damage the rim edge, this procedure is contrary to the most basic work safety regulations.

The object of the invention is to solve this problem within the framework of a simple, practical, functional and low-cost solution.

The concept on which the invention is based consists of providing a tool applicable to the aforestated tyre removal machines which can maintain that portion of bead being inserted distant from the outer surface of the bead retention edge of the wheel rim, to prevent any mutual contact between these parts.

Said tool, known as a bead guide, has according to the invention one end provided with a rounded profiled bead guiding appendix to be inserted, without making contact with the rim edge, between this latter and the bead, immediately upstream of the roller which presses on the bead. The appendix branches from an arm provided with means for its fixing to the machine, for example to the top of the roller which presses against the tubeless tyre bead.

It also comprises two small idle rollers for resting and sliding on the edge and side of the wheel rim respectively, without damaging these.

The objects and advantages of the invention together with its constructional and operational characteristics will be more apparent from the detailed description of a preferred embodiment thereof given with reference to the accompanying drawings, which are provided by way of non-limiting example.

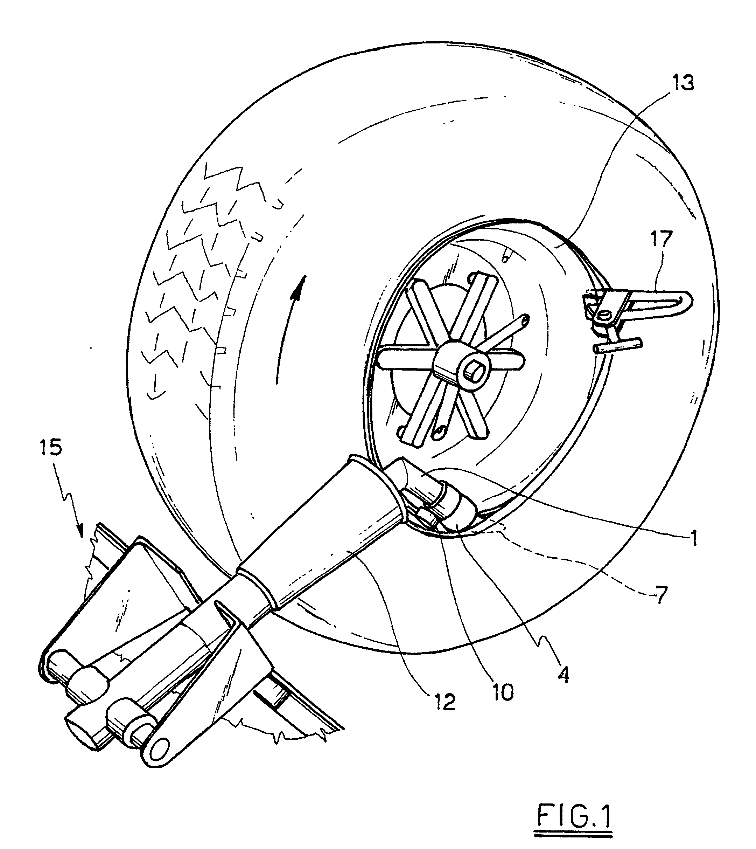

Figure 1 is a perspective view of the invention in the operating position for mounting a tyre.
Figure 2 is a plan view of the tool of the invention, mounted on the presser roller of the tyre removal machine.
Figure 3 is a view in the direction III indicated in Figure 2.
Figure 4 is a section on the line IV-IV of Figure 2.

From said figures it can be seen that the bead guide tool of the invention consists of a robust metal cylindrical arm 1 bent to an obtuse angle and provided at one end with a bead guide head 4. The shorter portion of the cylindrical arm 1 is insertable into the top of the hollow shaft 11 of the tubeless tyre roller 12 of the tyre removal machine, shown only in part and indicated by the reference numeral 15.

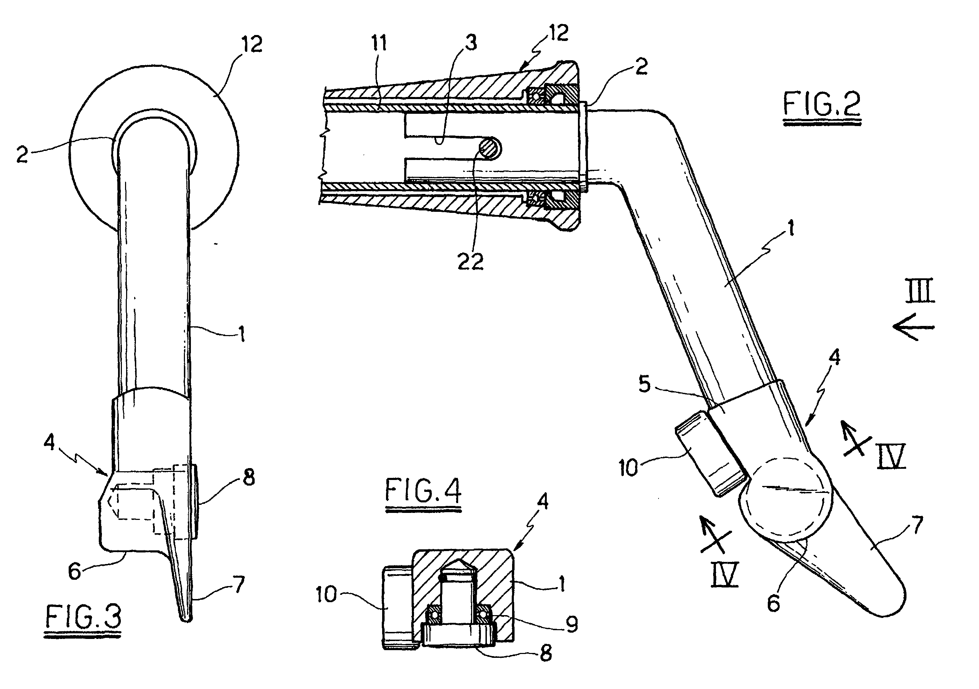

For correct positioning and orientation of the bead guide tool, the short portion of the arm 1 comprises a stop shoulder or flange 2 and a diametrical end slot 3 for engagement by a transverse pin 22 provided in the hollow shaft 11 of the tubeless tyre presser roller 12 (see Figure 2).

The type of engagement of the arm 1 with the hollow shaft 11 of the roller 12 can also be different from that shown, provided it results in torsional locking and enables correct orientation of the tool to be maintained.

It is orientated in proximity to that tangential plane of the wheel rim close to the tool, and such that the bead guide tool lies upstream of the roller 12.

The longer portion of the arm 1 presents at its free end the head 4 for guiding the bead during the mounting of the tyre on the rim 13 of the vehicle wheel.

The head 4 comprises essentially a body 5 fixed to the end of the cylindrical arm 1, and having its free end shaped to define a projecting horizontal appendix or tongue 7 which in plan view is inclined at an obtuse angle to the longer portion of the arm 1. In plan view said appendix or tongue 7 is triangular with a rounded end and a thickness which decreases towards this latter, it blending into the body 5 which in proximity to said tongue 7 has a cylindrical surface 6.

The head 4 also has a flat wall substantially aligned with the appendix or tongue 7, all the edges being rounded and all the walls smoothly blending into each other in order to facilitate sliding on the tyre bead (see Figure 3).

From said flat wall of the head 4 there slightly projects the convex face of a wheel 8 mounted, by way of a bearing 9, on an axis corresponding with the axis of the cylindrical surface 6 of the body 5.

Finally, in a position opposite the appendix 7, the head is provided with a small cylindrical roller 10 which, as in the case of the wheel 8, projects slightly from the flat wall of the head 4.

Said roller 10 is positioned between the wheel 8 and the presser roller 12, and is mounted idly on an axis perpendicular to the axis of the wheel 8.

The bead guide tool of the invention is used in mounting the tyre on the relative wheel rim in the following manner.

After inserting the entire tyre rear bead and a portion of its front bead into the wheel rim in the usual manner, the special gripper 17 is applied to the front edge of the wheel rim downstream of the presser roller 12. With the machine at rest and with the bead guide tool of the invention mounted on the shaft 11 of the presser roller 12, the tyre front bead is positioned straddling the appendix or tongue 7 of the bead guide tool and below the presser roller 12 of the machine, so that the roller 10 lies against the side of the wheel rim.

At this point the shaft carrying the wheel rim 13 is rotated while simultaneously moving the presser roller 12 with the said tool towards the rim 13. By virtue of the thrust of the roller 12, that bead portion lying between the gripper 17 and the bead guide tool slides along this latter to become progressively and comfortably inserted automatically beyond the front edge of the wheel rim, before the gripper 17 reaches the bead guide tool.

During this insertion the bead is maintained spaced from the wheel rim edge by the appendix 7 of the tool of the invention, so preventing any damage to the most delicate part of the tubeless tyre bead, ie that which provides the seal against the rim during tyre inflation, even if the wheel rim edge is in a poor state.

Moreover, the presence of the wheel 8 prevents any contact between the bead guide tool and the wheel rim causing damage to this latter.

## Claims

1. A bead guide tool for tyre removal machines comprising a rotary shaft on which the wheel rim (13) is secured, a tool carrier arm (1) lying in a plane parallel to the wheel rim and movable parallel to itself away from and towards the wheel rim, and a presser roller (12) idle on a shaft (11) locked to the end of said arm and arranged to act on the tyre bead, **characterised by** comprising a shaped body (5) removably fixed to said shaft upstream of said roller and provided with an appendix (7) to be inserted between the bead and the wheel rim edge to prevent them from making mutual contact in proximity to said presser roller.

2. A bead guide tool as claimed in the preceding claim, **characterised in that** said appendix (7) is triangular in plan with its end rounded and its thickness decreasing towards this latter.

3. A bead guide tool as claimed in the preceding claims, **characterised by** being orientated in proximity to that tangential plane of the wheel rim (13) close to the tool, and such that the bead guide tool lies upstream of the presser roller (12).

4. A bead guide tool as claimed in claim 1, **characterised in that** the shaped body (5) has a cylindrical surface (6) arranged in proximity to and facing said appendix (7), and smoothly blending into it.

5. A bead guide tool as claimed in the preceding claims, **characterised in that** the shaped body (5) has a flat wall substantially aligned with said appendix and from which there projects a wheel (8) rotatable about an axis coinciding with the axis of said cylindrical surface (6) of the shaped body.

6. A bead guide tool as claimed in the preceding claims, **characterised in that** the head (4) is provided, in a position opposite the appendix, with a small roller (10) the generating line of which projects from the flat wall of the shaped body.

7. A bead guide tool as claimed in the preceding claims, **characterised in that** the shaped body (5) of the tool is provided with means for its torsional locking to matching means with which the shaft (11) of the presser roller (12) of the tyre removal machine is provided.

## Patentansprüche

1. Werkzeug zum Führen von Reifenwulsten für Reifendemontiermaschinen mit einer rotierenden Welle, auf welcher die Radfelge (13) angebracht ist, mit einem Werkzeugträgerarm (1), der in einer Ebene parallel zu der Radfelge liegt und parallel zu sich selbst weg von und in Richtung der Radfelge bewegbar ist, und mit einer Pressrolle (12), welche freilaufend auf einer Welle (11) angeordnet ist, die an dem Ende des Arms befestigt und dafür vorgesehen ist, auf den Reifenwulst einzuwirken,
**gekennzeichnet durch**
einen geformten Körper (5), der abnehmbar auf der Welle vor der Pressrolle angebracht und mit einem Vorsprung (7) versehen ist, welcher dafür vorgesehen ist, zwischen den Wulst und den Radfelgenrand eingeführt zu werden, um zu verhindern, dass dieselben in der Nähe der Pressrolle in gegenseitigen Kontakt treten.

2. Werkzeug zum Führen von Reifenwulsten nach dem vorhergehenden Anspruch,
**dadurch gekennzeichnet, dass**
der Vorsprung (7) im Querschnitt dreieckig ist, wobei sein Ende abgerundet ist und seine Dicke sich in Richtung des Endes verringert.

3. Werkzeug zum Führen von Reifenwulsten nach den vorhergehenden Ansprüchen,
**dadurch gekennzeichnet, dass**
es in der Nähe derjenigen Tangentialebene der Radfelge (13) in der Nähe des Werkzeugs orientiert ist und derart, dass das Werkzeug zum Führen von Reifenwulsten vor der Pressrolle (12) liegt.

4. Werkzeug zum Führen von Reifenwulsten nach Anspruch 1,
**dadurch gekennzeichnet, dass**
der geformte Körper (5) eine zylindrische Oberfläche (6) aufweist, welche in der Nähe des Vorsprungs (7) liegt, demselben zugerichtet ist und sanft in denselben übergeht.

5. Werkzeug zum Führen von Reifenwulsten nach den vorhergehenden Ansprüchen,
**dadurch gekennzeichnet, dass**
der geformte Körper (5) eine flache Wand aufweist, welche im wesentlichen mit dem Vorsprung ausgerichtet ist und von welcher ein Rad (8) vorsteht, welches um eine Achse rotierbar ist, die sich mit der Achse der zylindrischen Oberfläche (6) des geformten Körpers schneidet.

6. Werkzeug zum Führen von Reifenwulsten nach den vorhergehenden Ansprüchen,
**dadurch gekennzeichnet, dass**
der Kopf (4) in einer dem Vorsprung gegenüberliegenden Position mit einer kleinen Rolle (10) versehen ist, deren erzeugende Linie von der flachen Wand des geformten Körpers vorspringt.

7. Werkzeug zum Führen von Reifenwulsten nach den vorhergehenden Ansprüchen,
**dadurch gekennzeichnet, dass**
der geformte Körper (5) des Werkzeugs mit einer Einrichtung zum torsionalen Verschließen mit einer entsprechenden Einrichtung versehen ist, mit welcher die Welle (11) der Pressrolle (12) der Reifendemontiermaschine versehen ist.

## Revendications

1. Outil détalonneur pour appareils démonte-pneus comprenant un arbre rotatif auquel est assurée la jante (13), un bras porte-outil (1) situé sur un plan parallèle à la jante et qui se déplace parallèlement à celle-ci en s'en approchant et en s'en éloignant, et un cylindre presse-jante (12) à rouleaux monté sur un mandrin (11) bloqué à l'extrémité dudit bras et ajusté de sorte à agir sur le talon du pneu, **caractérisé en ce qu'**il comprend un organe profilé (5) extractible, fixé au mandrin situé en amont dudit cylindre, et muni d'un appendice (7) insérable entre le talon et le bord de la jante pour les empêcher d'entrer mutuellement en contact à proximité dudit cylindre presse-jante.

2. Outil détalonneur selon la revendication précédente, **caractérisé en ce que** ledit appendice (7) est triangulaire, situé sur le même plan que son extrémité arrondie et dont l'épaisseur va décroissant en direction de ladite extrémité.

3. Outil détalonneur selon les revendications précédentes, **caractérisé en ce qu'**il est orienté à proximité du plan tangentiel de la partie de la jante (13) proche de l'outil, de sorte que l'outil détalonneur se trouve juste au-dessus du cylindre presse-jante (12).

4. Outil détalonneur selon la revendication 1, **caractérisé en ce que** l'organe profilé (5) a une surface cylindrique (6) disposée à proximité et faisant face audit appendice (7), et s'insérant en douceur dans ce dernier.

5. Outil détalonneur selon les revendications précédentes, **caractérisé en ce que** ledit organe profilé (5) a une paroi plate pratiquement dans l'alignement dudit appendice, d'où se projette une roue (8) tournant autour d'un axe coïncidant avec l'axe de ladite surface cylindrique (6) dudit organe profilé.

6. Outil détalonneur selon les revendications précédentes, **caractérisé en ce que** la tête (4) de l'outil, placée dans une position perpendiculaire audit appendice, est pourvue d'une petite roue (10) dont la directrice suit la génératrice formée par la paroi plate dudit organe profilé.

7. Outil détalonneur selon les revendications précédentes, **caractérisé en ce que** l'organe profilé (5) est muni d'éléments servant à le bloquer en torsion pour l'adapter aux éléments qui équipent le mandrin (11) du cylindre presse-jante (12) de l'appareil démonte-pneu.
